# FASCICULE DE BREVET EUROPEEN

(11) **EP 4 121 919 B1**
(45) Date de publication et mention de la délivrance du brevet: **09.07.2025**
(21) Numéro de dépôt: 21712990.7
(22) Date de dépôt: 16.03.2021
(51) Int. Cl.: G06Q 10/0833, G06Q 10/08

(54) **SYSTÈME D'ACHEMINEMENT D'UN OBJET PAR UN COLIS PRIMAIRE IDENTIFICATION DE L'OBJET ET AFFICHAGE SUR LE COLIS PRIMAIRE D'UN LABEL CORRESPONDANT À L'OBJET IDENTIFIÉ**
SYSTEM ZUR LIEFERUNG EINES OBJEKTS UNTER VERWENDUNG EINES PRIMÄREN PAKETS ZUR IDENTIFIZIERUNG DES OBJEKTS UND ANZEIGE EINES DEM IDENTIFIZIERTEN OBJEKT ENTSPRECHENDEN ETIKETTS AUF DEM PRIMÄREN PAKET
SYSTEM FOR DELIVERING AN OBJECT USING A PRIMARY PARCEL IDENTIFYING THE OBJECT AND DISPLAYING OF A LABEL CORRESPONDING TO THE IDENTIFIED OBJECT ON THE PRIMARY PARCEL

(30) Priorité: 18.03.2020 FR 2002657
(43) Date de publication de la demande: 25.01.2023
(73) Titulaire: PA. COTTE SA, 1009 PULLY (CH)
(72) Inventeur: COTTE, Pierre-Alain, 92224 Amberg (DE)
(74) Mandataire: reuteler & cie SA
(86) Numéro de dépôt international: PCT/EP2021/056599
(87) Numéro de publication internationale: WO 2021/185792

(56) Documents cités:
- FR-A1- 3 056 796
- US-A1- 2012 235 791

## Description

Le domaine de l'invention est celui de la conception et de la fabrication d'équipements dédiés à la logistique.

Plus précisément, l'invention concerne l'acheminement d'objets, et en particulier celui d'objets généralement issus de plateformes de commerce électronique ou transférés d'un particulier à un autre.

Dans le domaine de l'invention, l'acheminement d'objets par les plateformes de commerce électronique s'opèrent très souvent en disposant le ou les objets à acheminer dans un colis pourvu, aux fins de l'acheminement, d'une étiquette présentant au moins un code visuel, prenant notamment la forme d'un code-barres imprimé, ce qui permet d'identifier le colis par chacun des acteurs intervenant dans l'acheminement du colis.

Classiquement, pour l'acheminement d'un ou plusieurs objets, le colis est mis en forme par un opérateur. Le ou les objets sont ensuite disposés dans le colis mis en forme, puis ce dernier est refermé et étiqueté en vue de son acheminement.

Dans le domaine de l'acheminement d'objets, il est une thématique qui concerne la réexpédition de produits, ou plus largement d'objets, en vue de leur recyclage et/ou de leur destruction.

A ce titre, on peut citer notamment :
- les capsules de café usagées ;
- les piles usagées ou, plus généralement, les batteries pour petits équipements électriques ;
- certains équipements médicaux, tels que des seringues ;
- des médicaments périmés ;
- ...

Actuellement, pour certains de ces objets devant ou pouvant être réexpédiés, il est constaté, et même déploré, que les usagers de ces objets ne prennent pas le temps ou ne font pas l'effort de renvoyer ces objets à l'opérateur en charge de leur recyclage ou de leur destruction.

Il existe donc un besoin en termes d'incitation des usagers des objets devant être réexpédiés à procéder à leur réexpédition.

Parallèlement, récemment, des colis connectés ont fait leur apparition. Ces colis sont équipés d'un dispositif d'affichage électronique visible de l'extérieur du colis et destiné à afficher une adresse postale d'expédition et éventuellement plusieurs autres types d'information. Un dispositif connu de l'art antérieur est décrit dans le brevet US 2012/235791.

Les dispositifs d'affichage de ces colis peuvent être programmés pour permettre à l'utilisateur du colis d'activer une réexpédition du colis à un lieu de dépôt prédéterminé, l'adresse de dépôt étant alors affichée sur le dispositif d'affichage électronique.

De plus, compte tenu de leur coût, ces colis « connectés » sont réalisés dans des matériaux résistant aux différentes manipulations (ouverture, fermeture, mise en forme...) et aux différents chocs susceptibles d'intervenir pendant leur phase de transport. De cette façon, ces colis sont conçus pour être réutilisés de très nombreuses fois.

Actuellement, de tels colis ne sont pas utilisés dans un contexte d'incitation à la réexpédition de l'objet tel que ceux mentionnés précédemment.

L'invention a notamment pour objectif de pallier les inconvénients ou insuffisances de l'art antérieur.

Plus précisément, l'invention a pour objectif de proposer un système d'acheminement d'objets à l'aide de colis connectés réutilisables qui facilitent la réexpédition d'objets usagés vers un centre de recyclage ou de destruction.

L'invention a également pour objectif de fournir un tel système d'acheminement d'objets qui préserve l'intégrité du colis y compris avec des objets transportés agressifs ou salissants pour le colis.

L'invention a encore pour objectif de fournir un tel système qui soit simple d'utilisation pour les utilisateurs.

Ces objectifs, ainsi que d'autres qui apparaitront par la suite, sont atteints grâce à l'invention qui a pour objet un système d'acheminement d'un objet, mettant en oeuvre :
- une pluralité de colis primaires présentant chacun un dispositif d'affichage électronique consultable depuis l'extérieur du colis, et incluant une unité informatique paramétrée pour transmettre des consignes d'affichage au dispositif d'affichage électronique,
- une plateforme informatique comprenant une base de données relative aux objets, mettant en correspondance, pour chaque objet, un identifiant et un label à afficher sur le dispositif d'affichage électronique , la plateforme informatique étant reliée à des premiers moyens de communication longue distance, les colis primaires étant reliés à des deuxième moyens de communication longue distance aptes à communiquer avec les premiers moyens de communication longue distance,
caractérisé en ce qu'il comprend :
- au moins une radio-étiquette à coupler, directement ou indirectement, à l'objet et contenant l'identifiant de l'objet,
- un émetteur-récepteur de proximité intégré à chaque colis primaire, apte à communiquer avec la radio-étiquette et étant paramétré pour lire l'identifiant,
et en ce que l'unité informatique est reliée à l'émetteur-récepteur et est en outre paramétrée pour transmettre l'identifiant à la plateforme informatique par l'intermédiaire des premiers et des deuxièmes moyens de communication longue distance, la plateforme informatique étant paramétrée pour retourner à l'unité informatique le label correspondant à l'identifiant et l'unité informatique étant paramétrée pour transmettre au dispositif d'affichage électronique une consigne d'affichage du label.

Ainsi, grâce à l'invention, le colis primaire est programmé, par l'intermédiaire de la radio-étiquette couplée à l'objet à expédier (ou à réexpédier), avec le label correspondant à l'identifiant de l'objet.

On note que l'identifiant de l'objet est unique, certifié et crypté.

On note également que, au sens de l'invention, un « label » peut être défini comme étant une étiquette numérique intégrant l'adresse du destinataire, l'adresse de l'expéditeur et des tags logistiques de suivi. A ce titre, une fois affiché par le dispositif d'affichage électronique du colis primaire, le label est assimilable à une étiquette apposée sur le colis primaire et portant diverses informations. Pour des raisons de sécurisation du contenu aucune mention relative à celui-ci n'est portée sur le label.

De plus, un système d'acheminement selon l'invention peut s'avérer revêtir une dimension d'incitation à la réexpédition d'objets devant être recyclés ou détruits. En effet, un objet de ce type peut être délivré avec une radio étiquette dédiée, programmée avec un identifiant, ce dernier étant lui-même enregistré dans la base de données de la plateforme informatique pour y associer un label à afficher sur le dispositif d'affichage électronique du colis primaire. Il suffit alors au consommateur de placer l'objet consommé dans le colis primaire approprié pour que ce dernier, par l'intermédiaire de son intelligence embarquée, affiche automatiquement l'adresse de réexpédition correspondant à l'objet placé dans le colis primaire.

Selon une première solution avantageuse, l'émetteur-récepteur de proximité est un lecteur RFID, et plus précisément un lecteur RFID UHF.

Selon une deuxième solution avantageuse, l'émetteur-récepteur de proximité est un lecteur NFC.

Dans l'un ou l'autre cas, ce type d'émetteur-récepteur de proximité est très courant et peut donc être implémenté de façon peu onéreuse et en grande série.

Selon une solution avantageuse, la base de données est paramétrée de telle sorte que le label comprend des données relatives à une adresse physique de destination.

Comme indiqué précédemment, ceci permet un affichage automatique de l'adresse physique de destination sur le colis primaire. Cela étant, le label peut comprendre d'autres données que l'adresse de destination sans sortir du cadre de l'invention.

Ainsi, selon une autre solution avantageuse, la base de données est paramétrée de telle sorte que le label comprend des données relatives au poids de l'objet.

De cette façon, à l'aide d'un dispositif de prise de poids intégré au colis primaire, il est possible de calculer la facturation de la livraison pour tenir compte de la masse du contenu. En d'autres termes, le colis primaire transmet de manière cryptée l'identifiant unique du contenu et son poids. En retour, la plateforme informatique envoie un label prépayé au bon poids et indiquant l'adresse physique du destinataire susceptible de pouvoir traiter le contenu.

Selon un mode de réalisation particulier, le système met en oeuvre des colis secondaires, aptes à être contenus dans les colis primaires, la radio-étiquette étant portée par les colis secondaires.

On comprend que, dans ce mode de réalisation, la radio-étiquette n'est pas portée directement par l'objet à réexpédier lui-même, mais par un autre colis, dit colis secondaire, dans lequel l'objet est introduit, le tout étant placé dans le colis primaire.

Dans le contexte de ce mode de réalisation, il est alors possible de transporter, dans un colis primaire connecté réutilisable, des objets susceptibles d'être agressifs ou salissants pour le colis primaire. En effet, l'objet agressif et/ou salissant est confiné dans le colis secondaire. Il en résulte que l'intégrité matérielle du colis primaire est préservée, ainsi que sa capacité à être réutilisée de multiples fois, sans nécessiter d'entretien ou de maintenance.

En effet, le colis secondaire constitue, vis-à-vis du colis primaire, une enceinte de protection pour le volume interne du colis primaire.

Selon ce mode de réalisation, les colis secondaires comprennent un contenant présentant une cavité et les moyens de fermeture pouvant adopter, avec le contenant, une configuration d'ouverture ou une configuration de fermeture dans laquelle les moyens de fermeture interdisent l'accès à la cavité, la radio-étiquette étant intégrée dans un scellé garant d'un maintien du colis secondaire dans sa configuration de fermeture.

De cette façon, le scellé a une double fonction, à savoir :
- il forme un support portant les données d'identification de l'objet transporté ;
- il maintient dans la configuration de fermeture le contenant et les moyens de fermeture associés, interdisant le remplacement de l'objet transporté par un autre (non correspondant à l'identifiant) ou, à tout le moins, signale la réouverture du colis secondaire.

Dans cas, le scellé comprend avantageusement une partie dégradable irréversiblement lors d'un passage du colis secondaire de la configuration de fermeture à la configuration d'ouverture.

Ainsi, il n'est pas possible de porter atteinte à l'intégrité du scellé sans que cela soit visible ou, à tout le moins, sans que cela soit signalé.

Selon un mode de réalisation particulier, le scellé prend la forme d'une bandelette destinée à être collée à chevauchement sur le contenant et les moyens de fermeture des colis secondaires dans la configuration de fermeture des colis secondaires.

Un tel scellé, par exemple autocollant, s'avère très pratique d'utilisation et peut être mis en oeuvre rapidement sur le colis secondaire.

Préférentiellement, le scellé comprend une puce électronique de radio-identification, et des premiers moyens de communication comprenant une antenne, les premiers moyens de communication étant couplés à la puce électronique et s'étendant au moins partiellement dans la partie dégradable du scellé, l'émetteur-récepteur du colis primaire étant configuré pour envoyer périodiquement une requête radio susceptible d'être captée par l'antenne, puis transmise à la puce électronique, et réceptionner un signal retour produit par la puce électronique en réponse à la requête radio puis transmis par l'antenne, l'unité informatique étant paramétrée pour détecter une absence de signal retour.

Selon ce mode de réalisation, il est possible de connaître en temps réel si le scellé garantissant le maintien de la configuration fermée du colis secondaire a été dégradé. Une telle information permet donc de savoir si le colis secondaire a été ouvert suite à l'apposition du scellé. Une consultation de l'unité informatique du colis primaire permet de prendre connaissance de l'information d'ouverture éventuelle.

En effet, une ouverture du colis secondaire et, en d'autres termes, un passage de sa configuration de fermeture à sa configuration d'ouverture, entraîne une dégradation (rupture) de la partie dégradable du scellé. Ainsi, du fait que les premiers moyens de communication sont intégrés dans la partie dégradable, alors ils sont également dégradés lors de l'ouverture du colis secondaire. Cette dégradation des premiers moyens de communication empêche alors la réception et/ou la transmission de la requête émise par un émetteur-récepteur jusqu'à la puce électronique de radio-identification et, par conséquent, la puce électronique ne produit pas de signal retour.

Dans ce contexte, on rappelle que les informations échangées entre l'étiquette, le colis primaire et la plateforme informatique distante sont cryptées et certifiées.

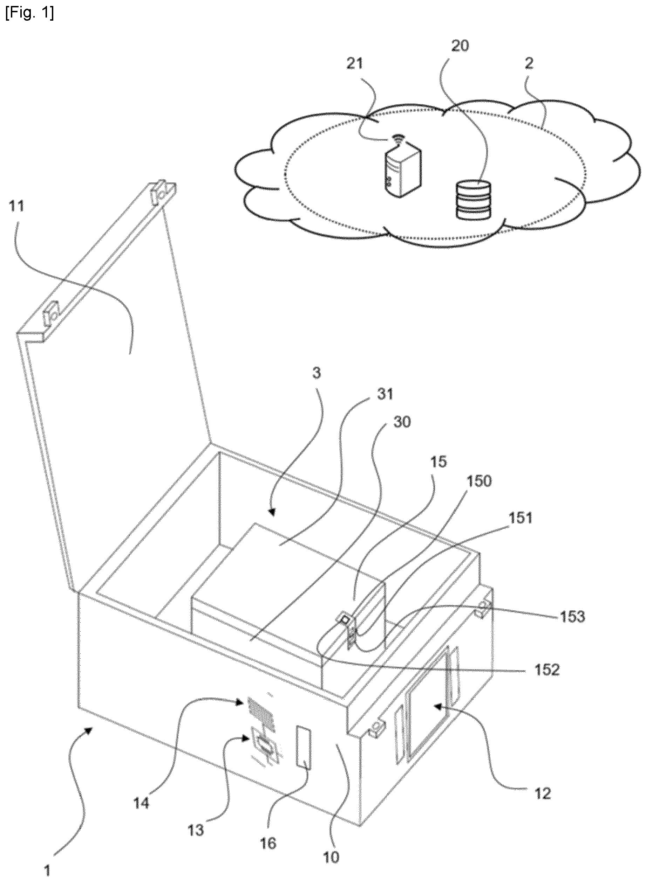

D'autres caractéristiques et avantages de l'invention apparaîtront plus clairement à la lecture de la description suivante d'un mode de réalisation préférentiel de l'invention, donné à titre d'exemple illustratif et non limitatif, en référence à la figure 1 unique qui fournit une illustration schématique d'un système d'acheminement selon l'invention.

Tel qu'illustré par la figure 1, un système d'acheminement d'un objet selon l'invention met en oeuvre une pluralité de colis primaires 1, du type constitués par :
- une caisse 10 délimitant un volume de réception destiné à accueillir un ou plusieurs objets ;
- un couvercle 1 relié ou non à la caisse 10, et pouvant adopter, avec la caisse, une configuration de fermeture du colis primaire ou une configuration d'ouverture du colis primaire.

Les colis primaires présentent chacun, en outre :
- un dispositif d'affichage 12 électronique et consultable depuis l'extérieur du colis primaire ;
- une unité informatique 13 paramétrée pour transmettre des consignes d'affichage au dispositif d'affichage électronique.

Le système d'acheminement selon l'invention comprend en outre une plateforme informatique 2 incluant une base de données 20 relative aux objets à acheminer, cette base de données mettant en correspondance, pour chaque objet, un identifiant et un label à afficher sur le dispositif d'affichage électronique des colis primaires.

De plus, la plateforme informatique est reliée à des premiers moyens de communication 21 longue distance.

Les colis primaires sont quant à eux reliés à des deuxièmes moyens de communication 14 longue distance aptes à communiquer avec les premiers moyens de communication longue distance de la plateforme informatique.

Selon le principe de l'invention, le système d'acheminement comprend, pour chaque colis primaire :
- une radio-étiquette 15 (voire plusieurs) accouplée directement ou indirectement, à l'objet à acheminer, cette radio-étiquette étant programmée de façon à contenir l'identifiant de l'objet à acheminer tel que mémorisé dans la base de données 20 de la plateforme informatique ;
- un émetteur-récepteur 16 de proximité intégré à chaque colis primaire et apte à communiquer avec la radio-étiquette 15 du même colis primaire, l'émetteur-récepteur étant paramétré pour lire l'identifiant contenu dans la radio-étiquette.

De plus, l'unité informatique du colis primaire est reliée à l'émetteur-récepteur 15 correspondant et est en outre paramétrée pour transmettre l'identifiant de l'objet contenu à la plateforme informatique 2 par l'intermédiaire des premiers moyens de communication longue distance et des deuxièmes moyens de communication longue distance. La plateforme informatique 2 est en outre paramétrée pour retourner à l'unité informatique 13, à nouveau par l'intermédiaire des premiers moyens de communication longue distance et des deuxièmes moyens de communication longue distance, le label correspondant à l'identifiant de l'objet contenu dans le colis primaire (le label en question ayant été mis en correspondance avec l'identifiant de l'objet par l'intermédiaire de la base de données 20 de la plateforme informatique 2). On note que l'identifiant contenu dans l'étiquette collée sur le colis est unique et certifié et que les échanges entre l'unité du colis primaire et la plateforme sont préférentiellement cryptés.

Au niveau du colis primaire, l'unité informatique est paramétrée pour, au final, transmettre au dispositif d'affichage 12 électronique du colis primaire une consigne d'affichage du label.

Le label comprenant préférentiellement des données relatives à une adresse physique de destination de l'objet à acheminer, l'adresse de destination s'affiche alors sur le dispositif d'affichage 12 électronique du colis primaire.

En ce sens, la base de données 20 de la plateforme informatique est paramétrée de telle sorte que le label, pour chaque objet à acheminer, comprenne lesdites données d'adresse physique de destination pour l'objet en question.

On note que la base de données de la plateforme informatique peut également être paramétrée de telle sorte que le label comprenne des données relatives au poids de l'objet.

S'agissant de l'émetteur-récepteur de proximité intégré au colis primaire, celui-ci peut être de type RFID ou de type NFC.

Selon le mode de réalisation illustré par la figure 1, le système d'acheminement met en oeuvre, en plus des colis primaires, des colis secondaires 3, aptes à être contenus dans les colis primaires (c'est-à-dire dimensionnés de façon à pouvoir être logés dans un colis primaire). Dans ce cas, le ou les objets à acheminer sont disposés et contenus à l'intérieur du colis secondaire transporté par le colis primaire. De plus, tel que cela apparait sur la figure 1, la radio-étiquette 15 est portée par le colis secondaire correspondant.

Selon ce mode de réalisation, les colis secondaires 3 comprennent chacun un contenant 30 présentant une cavité destinée à recevoir le ou les objets à acheminer, ainsi que des moyens de fermeture 31 (en pratique un couvercle) pouvant adopter, avec le contenant, une configuration d'ouverture donnant accès à la cavité du colis secondaire ou une configuration de fermeture dans laquelle les moyens de fermeture interdisent l'accès à la cavité.

Dans ce cas, la radio-étiquette 15 est alors intégrée dans un scellé 150 garant d'un maintien du colis secondaire dans sa configuration de fermeture.

Selon une caractéristique avantageuse, le scellé 150 comprend une partie dégradable 151 (illustrée schématiquement par la ligne pointillée en travers du scellé 150 et pouvant être constituée ou non par une prédécoupe). Cette partie dégradable l'est de façon irréversible lors du passage du colis secondaire de la configuration de la fermeture à la configuration d'ouverture.

Selon un mode de réalisation préférentiel, le scellé 150 prend la forme d'une bandelette, par exemple autocollante, destinée à être collée à chevauchement sur le contenant 30 et les moyens de fermeture 31 des colis secondaires dans la configuration de fermeture des colis secondaires.

Bien entendu, le scellé 150 est rapporté à chevauchement sur le contenant et les moyens de fermeture du colis secondaire une fois l'objet placé à l'intérieur du colis secondaire et celui-ci ramené dans la configuration de fermeture.

Toujours selon ce mode de réalisation, le scellé comprend une puce électronique 152 de radio-identification ainsi que des premiers moyens de communication sous la forme d'une antenne 153, couplés à la puce électronique par l'intermédiaire d'une liaison s'étendant au moins partiellement dans la partie dégradable du scellé.

L'émetteur-récepteur 16 du colis primaire est quant à lui paramétré pour envoyer périodiquement une requête radio susceptible d'être captée par l'antenne du scellé, puis transmise à la puce électronique. La puce est programmée pour produire un signal retour destiné à être réceptionné par l'émetteur-récepteur du colis primaire en réponse à la requête radio, ce signal retour étant transmis par l'intermédiaire de l'antenne. De plus, l'unité informatique est paramétrée pour détecter une absence de signal retour.

En cas d'absence de signal retour, l'unité informatique 13 est également paramétrée pour émettre un signal d'alerte à la plateforme informatique par l'intermédiaire des premiers moyens de communication longue distance et des deuxièmes moyens de communication longue distance.

Le fonctionnement d'un système d'acheminement tel que décrit précédemment, avec ou sans la mise en oeuvre de colis secondaire, est décrit ci-après.

Lorsqu'un objet est placé dans le colis primaire en portant directement ou indirectement la radio-étiquette 15, l'identifiant contenu dans la radio-étiquette est transmis à l'émetteur-récepteur de proximité, de façon connue en soi, les données relatives à l'identifiant étant transmises à l'unité informatique du colis primaire.

Cet identifiant est transmis, par l'intermédiaire des premiers moyens de communication longue distance et des deuxièmes moyens de communication longue distance, à la plateforme informatique.

Grâce à la base de données 20 relative aux objets, l'identifiant est mis en correspondance avec un label destiné à être affiché sur le dispositif d'affichage du colis primaire. Les données numériques relatives à ce label sont émises à destination de l'unité informatique 13 du colis primaire par l'intermédiaire des premiers moyens de communication longue distance et des deuxièmes moyens de communication longue distance.

Ces données relatives au label sont transmises par l'unité informatique du colis primaire au dispositif d'affichage électronique, avec une consigne d'affichage.

Ainsi, si le label contient les données relatives à une adresse physique de destination, celle-ci s'affiche sur le dispositif d'affichage électronique consultable depuis l'extérieur du colis primaire.

Avec un système d'acheminement d'objets selon l'invention, il est possible d'envisager une utilisation en mode « inventaire » : à la demande d'un opérateur ou automatiquement à intervalles de temps réguliers, les identifiants contenus dans les radio-étiquettes portées par les produits eux-mêmes ou par les colis secondaires sont lus par les émetteurs-récepteurs des colis primaires et sont transmis à la plateforme informatique. Lors de cette opération, l'ouverture des colis primaires n'est pas nécessaire.

## Revendications

1. Système d'acheminement d'un objet, mettant en œuvre :
- une pluralité de colis primaires (1) présentant chacun un dispositif d'affichage (12) électronique consultable depuis l'extérieur du colis, et incluant une unité informatique (13) paramétrée pour transmettre des consignes d'affichage au dispositif d'affichage électronique,
- une plateforme informatique (2) comprenant une base de données (20) relative aux objets, mettant en correspondance, pour chaque objet, un identifiant et un label à afficher sur le dispositif d'affichage électronique , la plateforme informatique étant reliée à des premiers moyens de communication (21) longue distance, les colis primaires (1) étant reliés à des deuxième moyens de communication (14) longue distance aptes à communiquer avec les premiers moyens de communication (21) longue distance,
- au moins une radio-étiquette (15) à coupler, directement ou indirectement, à l'objet et contenant l'identifiant de l'objet,
- un émetteur-récepteur (16) de proximité intégré à chaque colis primaire, apte à communiquer avec la radio-étiquette et étant paramétré pour lire l'identifiant,
et en ce que l'unité informatique (13) est reliée à l'émetteur-récepteur (16) et est en outre paramétrée pour transmettre l'identifiant à la plateforme informatique (2) par l'intermédiaire des premiers et des deuxièmes moyens de communication longue distance, **caractérisé en ce que** la plateforme informatique (2) est paramétrée pour retourner à l'unité informatique (13) le label correspondant à l'identifiant de manière à faciliter la réexpédition de l'objet et l'unité informatique (13) est paramétrée pour transmettre au dispositif d'affichage (12) électronique une consigne d'affichage du label de sorte à inciter à la réexpédition de l'objet, la base de données (20) étant paramétrée de telle sorte que le label comprend des données relatives à une adresse physique de destination.

2. Système d'acheminement d'un objet selon la revendication 1, **caractérisé en ce que** l'émetteur-récepteur (16) de proximité est un lecteur RFID.

3. Système d'acheminement d'un objet selon la revendication 1, **caractérisé en ce que** l'émetteur-récepteur (16) de proximité est un lecteur NFC.

4. Système d'acheminement d'un objet selon l'une quelconque des revendications 1 à 3, **caractérisé en ce que** la base de données (20) est paramétrée de telle sorte que le label comprend des données relatives au poids de l'objet.

5. Système d'acheminement d'un objet selon l'une quelconque des revendications 1 à 4, **caractérisé en ce qu'**il met en œuvre des colis secondaires (3), aptes à être contenus dans les colis primaires (1), la radio-étiquette (15) étant portée par les colis secondaires (3).

6. Système d'acheminement d'un objet selon la revendication 5, **caractérisé en ce que** les colis secondaires (3) comprennent un contenant (30) présentant une cavité et des moyens de fermeture (31) pouvant adopter, avec le contenant (30), une configuration d'ouverture ou une configuration de fermeture dans laquelle les moyens de fermeture (31) interdisent l'accès à la cavité, la radio étiquette (15) étant intégrée dans un scellé (150) garant d'un maintien du colis secondaire (3) dans sa configuration de fermeture.

7. Système d'acheminement d'un objet selon la revendication 6, **caractérisé en ce que** le scellé (150) comprend une partie dégradable (151) irréversiblement lors d'un passage du colis secondaire de la configuration de fermeture à la configuration d'ouverture.

8. Système d'acheminement d'un objet selon l'une des revendications 6 et 7, **caractérisé en ce que** le scellé (150) prend la forme d'une bandelette destinée à être collée à chevauchement sur le contenant (30) et les moyens de fermeture (31) des colis secondaires (3) dans la configuration de fermeture des colis secondaires.

9. Système d'acheminement d'un objet selon l'une des revendications 7 et 8, **caractérisé en ce que** le scellé (150) comprend une puce électronique (152) de radio identification, et des premiers moyens de communication comprenant une antenne (153), les premiers moyens de communication étant couplés à la puce électronique (152) et s'étendant au moins partiellement dans la partie dégradable (151) du scellé, et **en ce que** l'émetteur-récepteur(16) du colis primaire est configuré pour envoyer périodiquement une requête radio susceptible d'être captée par l'antenne (153) puis transmise à la puce électronique (152), et réceptionner un signal retour produit par la puce électronique (152) en réponse à la requête radio puis transmis par l'antenne (153), l'unité informatique (13) étant paramétrée pour détecter une absence de signal retour.

## Patentansprüche

1. System zum Befördern eines Objekts, das umfasst:
- eine Vielzahl von Primärverpackungen (1), die jeweils eine von außerhalb der Verpackung abrufbare elektronische Anzeigeeinrichtung (12) aufweisen und eine IT-Einheit (13) enthalten, die eingestellt ist, um Anzeigeangaben an die elektronische Anzeigeeinrichtung zu übertragen,
- eine IT-Plattform (2), die eine Datenbank (20) umfasst, die sich auf die Objekte bezieht, die für jedes Objekt eine Kennung und ein auf der elektronischen Anzeigeeinrichtung anzuzeigendes Kennzeichen zuordnet, wobei die IT-Plattform mit ersten Fernkommunikationsmitteln (21) verbunden ist, die Primärverpackungen (1) mit zweiten Fernkommunikationsmitteln (14) verbunden sind, die imstande sind, mit den ersten Fernkommunikationsmitteln (21) zu kommunizieren,
- mindestens ein Funketikett (15), das direkt oder indirekt mit dem Objekt zu koppeln ist und die Kennung des Objekts enthält,
- einen in jede Primärverpackung integrierten Nahbereichssender/-empfänger (16), der imstande ist, mit dem Funketikett zu kommunizieren kann und eingestellt ist, um die Kennung zu lesen,
und dass die IT-Einheit (13) mit dem Sender/Empfänger (16) verbunden ist und ferner eingestellt ist, um die Kennung über die ersten und zweiten Fernkommunikationsmittel an die IT-Plattform (2) zu übertragen,
**dadurch gekennzeichnet, dass** die IT-Plattform (2) eingestellt ist, um das der Kennung entsprechende Kennzeichen an die IT-Einheit (13) zurückzusenden, um den Rückversand des Objekts zu erleichtern, und die IT-Einheit (13) eingestellt ist, um an die elektronische Anzeigeeinrichtung (12) eine Anzeigeangabe des Kennzeichens zu übertragen, um zum Rückversand des Objekts anzuregen, wobei die Datenbank (20) derart eingestellt ist, dass das Kennzeichen Daten umfasst, die sich auf eine physische Zieladresse beziehen.

2. System zum Befördern eines Objekts nach Anspruch 1, **dadurch gekennzeichnet, dass** der Nahbereichssender/-empfänger (16) ein RFID-Lesegerät ist.

3. System zum Befördern eines Objekts nach Anspruch 1, **dadurch gekennzeichnet, dass** der Nahbereichssender/-empfänger (16) ein NFC-Lesegerät ist.

4. System zum Befördern eines Objekts nach einem der Ansprüche 1 bis 3, **dadurch gekennzeichnet, dass** die Datenbank (20) derart eingestellt ist, dass das Kennzeichen Daten umfasst, die sich auf das Gewicht des Objekts beziehen.

5. System zum Befördern eines Objekts nach einem der Ansprüche 1 bis 4, **dadurch gekennzeichnet, dass** es Sekundärverpackungen (3) umfasst, die imstande sind, in den Primärverpackungen (1) enthalten zu sein, wobei das Funketikett (15) von den Sekundärverpackungen (3) getragen wird.

6. System zum Befördern eines Objekts nach Anspruch 5, **dadurch gekennzeichnet, dass** die Sekundärverpackungen (3) ein Behältnis (30) umfassen, das einen Hohlraum aufweist und Verschlussmittel (31), die mit dem Behältnis (30) eine Öffnungskonfiguration oder eine Verschlusskonfiguration annehmen können, in der die Verschlussmittel (31) den Zugang zum Hohlraum untersagen, wobei das Funketikett (15) in eine Versiegelung (150) integriert ist, die einen Halt der Sekundärverpackung (3) in seiner Verschlusskonfiguration garantiert.

7. System zum Befördern eines Objekts nach Anspruch 6, **dadurch gekennzeichnet, dass** die Versiegelung (150) einen Teil (151) umfasst, der beim Übergang der Sekundärverpackung aus der Verschlusskonfiguration in die Öffnungskonfiguration unumkehrbar zerstörbar ist.

8. System zum Befördern eines Objekts nach einem der Ansprüche 6 und 7, **dadurch gekennzeichnet, dass** die Versiegelung (150) die Form eines Streifens hat, der bestimmt ist, in der Verschlusskonfiguration der Sekundärverpackungen überlappend auf das Behältnis (30) und die Verschlussmittel (31) der Sekundärverpackungen (3) geklebt zu sein.

9. System zum Befördern eines Objekts nach einem der Ansprüche 7 und 8, **dadurch gekennzeichnet, dass** die Versiegelung (150) einen elektronischen Funkidentifikationschip (152) und erste Kommunikationsmittel umfasst, die eine Antenne (153) umfassen, wobei die ersten Kommunikationsmittel mit dem elektronischen Chip (152) gekoppelt sind und sich zumindest teilweise in den zerstörbaren Teil (151) der Versiegelung erstrecken, und dadurch, dass der Sender/Empfänger (16) der Primärverpackung ausgelegt ist, um periodisch eine Funkabfrage zu senden, die von der Antenne (153) empfangbar ist und dann an den elektronischen Chip (152) übertragen wird, und ein vom elektronischen Chip (152) als Antwort auf die Funkabfrage erzeugtes Rücksignal zu empfangen, das dann von der Antenne (153) übertragen wird, wobei die IT-Einheit (13) eingestellt ist, um ein Fehlen des Rücksignals zu erkennen.

## Claims

1. A system for routing an object, implementing:
- a plurality of primary packages (1) each having an electronic display device (12) accessible from the exterior of the package, and including a computing unit (13) parameterized to transmit display instructions to the electronic display device,
- a computing platform (2) comprising a database (20) relating to the objects, matching, for each object, an identifier and a label to be displayed on the electronic display device, the computing platform being connected to first long-distance communication means (21), the primary packages (1) being connected to second long-distance communication means (14) able to communicate with the first long-distance communication means (21),
- at least one RFID ticket (15) to be coupled, directly or indirectly, to the object and containing the identifier of the object,
- a proximity transceiver (16) integrated into each primary package, able to communicate with the RFID ticket and being parameterized to read the identifier,
and in that the computing unit (13) is connected to the transceiver (16) and is further parameterized to transmit the identifier to the computing platform (2) via the first and second long-distance communication means,
**characterized in that** the computing platform (2) is parameterized to return to the computing unit (13) the label corresponding to the identifier so as to facilitate the reshipment of the object and the computing unit (13) is parameterized to transmit to the electronic display device (12) a label display instruction so as to prompt to reship the object, the database (20) being parameterized such that the label comprises data relating to a physical destination address.

2. The system for routing an object according to claim 1, **characterized in that** the proximity transceiver (16) is an RFID reader.

3. The system for routing an object according to claim 2, **characterized in that** the proximity transceiver (16) is an NFC reader.

4. The system for routing an object according to any one of claims 1 to 3, **characterized in that** the database (20) is parameterized such that the label comprises data relating to the weight of the object.

5. The system for routing an object according to any one of claims 1 to 4, **characterized in that** it implements secondary packages (3), able to be contained in the primary packages (1), the RFID ticket (15) being carried by the secondary packages (3).

6. The system for routing an object according to claim 5, **characterized in that** the secondary packages (3) comprise a container (30) having a cavity and closing means (31) which can adopt, with the container (30), an open configuration or a closed configuration in which the closing means (31) prohibit access to the cavity, the RFID ticket (15) being integrated into a seal (150) guaranteeing that the secondary package (3) is held in its closed configuration.

7. The system for routing an object according to claim 6, **characterized in that** the seal (150) comprises a part (151) that is irreversibly degradable when the secondary package switches from the closed configuration to the open configuration.

8. The system for routing an object according to any of claims 6 and 7, **characterized in that** the seal (150) takes the form of a strip intended to be glued in an overlapping manner on the container (30) and the secondary package (3) closing means (31) in the closed configuration of the secondary packages.

9. The system for routing an object according to any of claims 7 and 8, **characterized in that** the seal (150) comprises an electronic radio frequency identification chip (152), and first communication means comprising an antenna (153), the first communication means being coupled to the electronic chip (152) and extending at least partially into the degradable part (151) of the seal, and **in that** the transceiver (16) of the primary package is configured to periodically send a radio request capable of being picked up by the antenna (153), then transmitted to the electronic chip (152), and to receive a return signal produced by the electronic chip (152) in response to the radio request then transmitted by the antenna (153), the computing unit (13) being parameterized to detect an absence of a return signal.
